(19) Europäisches Patentamt

European Patent Office

Office européen des brevets

(11) **EP 1 069 776 A2**

(12) **EUROPEAN PATENT APPLICATION**

(43) Date of publication:
**17.01.2001 Bulletin 2001/03**

(51) Int. Cl.⁷: **H04N 7/24**, H04N 7/26, H04N 7/36

(21) Application number: **00306031.6**

(22) Date of filing: **17.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.07.1999 JP 20318999**
**30.06.2000 JP 2000203103**

(71) Applicant: **SONY CORPORATION**
**Tokyo 141 (JP)**

(72) Inventors:
• **Matsuzaki, Atsushi**
**Shinagawa-ku, Tokyo 141 (JP)**
• **Okada, Hidehiko**
**Shinagawa-ku, Tokyo 141 (JP)**
• **Tagami, Shigekatsu**
**Shinagawa-ku, Tokyo 141 (JP)**
• **Yagura, Masanari**
**Shinagawa-ku, Tokyo 141 (JP)**
• **Nukaya, Fumitaka**
**Shinagawa-ku, Tokyo 141 (JP)**

(74) Representative:
**Pratt, Richard Wilson et al**
**D. Young & Co,**
**21 New Fetter Lane**
**London EC4A 1DA (GB)**

(54) **Transmitter, receiver, and signal transmission system**

(57) A system for lossless, wireless image transmission, including a transmitter for differentiating if the image data received has changed compared with the image data of the previous frame, setting an area of the image data to be transmitted according to a result of differentiation, adding data representing the area to the image data to be transmitted, converting the image data to be transmitted and the data representing the area to a serial signal, and transmitting the serial signal wirelessly and a receiver for receiving the transmitted serial radio signal and restoring the same to a serial signal, restoring the transmitted image data and the data representing the area of the image data from the serial signal restored, storing the image data transmitted based on the data representing the area, and reading the image data stored.

FIG.1

EP 1 069 776 A2

**Description**

BACKGROUND OF THE INVENTION

1. Field of the Invention

The present invention relates to a transmitter for transmission of for example a computer image signal to an input terminal of a projector, a PDP, or other large-size image display apparatus, a receiver for receiving this transmitted signal, and a signal transmission system using the same.

2. Description of the Related Art

Computer image data is presently becoming higher in degree of precision. At the same time, the resolution of display elements is steadily rising.

As a result of these technical trends, in recent years it has become common practice to input a computer image signal to a liquid crystal projector and use this for projection for presentations.

However, the cable used for inputting a computer image signal to a projector is generally one comprised of a bundle of five lines, that is, three image signal lines for the R, G, and B colors and two synchronization signal lines for horizontal synchronization and vertical synchronization. Due to the bandwidth of the signal, use has been made of thick, short cables.

For this reason, the positions of arrangement of the computer and the projector have been limited. This has made the presentation hard to perform.

In order to solve this problem, an image transmission system transmitting the image signal wirelessly such as disclosed in for example Japanese Unexamined Patent Publication (Kokai) No. 11-4461 has been proposed.

This image transmission system stores the input image data in a frame memory on the transmission side, reads out this data serially, transmits it by infrared ray or radio wave, returns the serial signal to a parallel signal on the reception side, stores the parallel signal in the frame memory on the reception side, and reads this memory to restore the RGB image data signals.

The image signal most frequently used in presentations at present is a signal referred to as an XGA. It consists of 1024 pixels in the horizontal direction and 768 pixels in the vertical direction-One with a frame frequency of 60 Hz has a clock frequency of 65 MHz. Since 8 bits are required for each of the R, G, and B colors, where transmitting data in the form of a serial signal, the transmission rate becomes about 1.6 GHz.

On the other hand, the bandwidth which can be transmitted through the air by an infrared ray at the present point of time is about 100 MHz. In the above image transmission system, it is possible to transmit data by using a plurality of frame periods.

In the above image transmission system, however, considered from the viewpoint of the transmission rate, only one image can be transmitted per 16 frames, so there was the problem that, even if for example the presenter moved the mouse, the movement of the cursor on the screen was awkward and became unnatural etc.

Further, in the image transmission system, an image compressing and encoding method such as the MPEG (Moving Picture Experts Group) or JPEG (Joint Photographic Expert Group) is generally used.

MPEG and JPEG are image compressing and encoding methods mainly suitable for encoding natural images (mainly video), but unsuitable for computer outputs (particularly a high precision text display or the like).

Further, motion detection for finding a motion vector from the image data and a discrete cosine transform (DCT) become necessary for the MPEG encoding, so the circuit size naturally becomes larger. As a result, the system becomes large and high in cost.

Further, in the case of computer output, it is also possible to transmit the file of the display image per as through a LAN (Local Area Network). Recently, wireless LAN products of the 2.4 GHz band have appeared.

In this case, the image quality remains as in the original, but the following problems occur.

First, when the transmitter side is the computer, and the receiver side is the display (monitor, projector), there is no problem on the transmitter side but there is a necessity for imparting the LAN function to the display of the receiver side.

When there is no function in the display, a computer must also be prepared at the receiver side. As a result, the cost rises.

Further, in order to use a LAN, software has to be set. This does not allow simple connection between the computer and the display by a VGA cable, for example, the setup time cannot be taken in advance and the method of setting up the LAN is troublesome, so is difficult for beginners.

A PV-LINK mainly considering high resolution display applications has been proposed by some companies, but a private video chip is used for using this PV-LINK, therefore it must be mounted on a mother board of the computer or a private board must be inserted into a graphic bus such as a PCI or an AGP and a private driver software must be installed. In this case as well, there are disadvantages similar to those of a LAN.

SUMMARY OF THE INVENTION

An embodiment of the present invention seeks to provide a transmitter capable of transmitting image data which can be reliably reproduced irrespective of the position of arrangement and the transmission rate, a receiver capable of receiving a transmitted signal from the transmitter and completely restoring the original signal, and a signal transmission system using the same.

Further, another embodiment seeks to provide a transmitter capable of preventing an increase of the circuit size and requiring no troublesome work, a receiver capable of receiving the signal from the transmitter and completely restoring the original signal, and a signal transmission system using the same.

According to a first aspect of the present invention, there is provided a transmitter of the present invention comprising a storing means for storing input image data, a differentiating means for differentiating whether or not the image data being input has changed compared with the image data of a previous frame stored in the storing means, a transmission area setting means for setting the area of the image data to be transmitted according to an output of the differentiating means, a transmission area data adding means for adding data representing the area to the image data to be transmitted, a means for converting the image data to be transmitted and the data representing the area to a serial signal, and a transmitting means for transmitting the serial signal.

According to a second aspect of the present invention, there is provided a receiver for receiving a serial radio signal containing image data and data representing an area of the image data, comprising a first restoring means for receiving the serial radio signal and restoring the same to a serial signal, a second restoring means for restoring the transmitted image data and the data representing the area of the image data from the serial signal restored by the first restoring means, a storing means for storing one frame's worth of the image data, a writing means for writing the transmitted image data into the storing means based on the data representing the area, and a reading means for reading the image data from the storing means.

According to a third aspect of the present invention, there is provided a signal transmission system comprising a transmitter including a storing means for storing input image data, a differentiating means for differentiating whether or not the image data being input has changed compared with the image data of the previous frame stored in the storing means, a transmission area setting means for setting an area of the image data to be transmitted according to an output of the differentiating means, a transmission area data adding means for adding data representing the area to the image data to be transmitted, a means for converting the image data to be transmitted and the data representing the area to a serial signal, and a transmitting means for transmitting the serial signal and has a receiver including a first restoring means for receiving the transmitted serial radio signal and restoring the same to a serial signal, a second restoring means for restoring the transmitted image data and the data representing the area of the image data from the serial signal restored by the first restoring means, a storing means for storing one frame's worth of the image data, a writing means for writing the transmitted image data into the storing means based on the data representing the area, and a reading means for reading the image data from the storing means.

Further, in an embodiment, the transmission area setting means of the transmitter designates a partial area of the image data where there was no change in the image data being input compared with the image data of the previous frame.

Further, in an embodiment, when there was no change in the image data being input compared with the image data of the previous frame, the transmission area setting means of the transmitter designates a partial area of the image data and then makes the transmitting means transmit the data representing the area of the image data and the image data in that area in one frame period and change the designated area for every frame so as to transmit all image data in a plurality of frame periods.

Further, in an embodiment, the transmission area setting means of the transmitter makes the transmitting means transmit the data representing the area of the image data and the image data in that area in one frame period when there was a change in the image data being input compared with the image data of the previous frame and in addition when the area of the changed image is less than the predetermined area.

Further, in an embodiment, when there was a change in the image data being input compared with the image data of the previous frame and in addition when the area of the changed image is more than the predetermined area, the transmission area setting means of the transmitter designates a partial area of the image data and then makes the transmitting means transmit the data representing the area of the image data and the image data in that area in one frame period and change the designated area for every frame so as to transmit all image data in a plurality of frame periods.

Further, in an embodiment, when there was a change in the image data being input compared with the image data of the previous frame, the transmission area setting means of the transmitter makes the transmitting means transmit the data representing the area of the image data and the image data in that area for one frame period when the area of the changed image is less than the predetermined area and designates a partial area of the image data and then makes the transmitting means transmit the data representing the area of the image data and the image data in that area in one frame period and change the designated area for every frame so as to transmit all image data in a plurality of frame periods when the area of the changed image is more than the predetermined area.

Further, in an embodiment, the transmitter comprises a means for compulsorily transmitting the image data of one frame in a predetermined period irrespective of the image data being input has changed compared with the image data of the previous frame.

Further, in an embodiment, the period during which the writing means of the receiver writes the transmitted image data into the storing means based on the data representing the area is defined as a blanking period of the output image data signal.

According to an embodiment, in the transmitter, the input image data is stored in the storing means. Then, in the differentiating means, the image data which is input at the present is differentiated whether or not it has changed compared with the image data of the previous frame stored in the storing means.

The result of differentiation of this differentiating means is input to the transmission area setting means, and the area of the image data to be transmitted is set.

Also, the data representing the area is added to this image data to be transmitted by the transmission area data adding means.

Then, the image data to be transmitted and the data representing the area are converted to a serial signal, and the serial signal is transmitted from the transmitting means wirelessly.

Further, in the transmitter, the image data of one frame is compulsorily transmitted in the predetermined period irrespective of whether or not for example the image data being input has changed compared with the image data of the previous frame.

Further, in the receiver, the serial radio signal transmitted from the transmitter is received at the first restoring means and restored to a serial signal.

The second restoring means restores the transmitted image data and the data representing the area of the image data from the aerial signal restored at the first restoring means.

Further, the transmitted image data is written into the storing means based on the data representing the area by the writing means.

Then, the image data from the storing means is read by the reading means.

BRIEF DESCRIPTION OF THE DRAWINGS

These and other objects and features of the present invention will become clearer from the following description of the preferred embodiments given with reference to the accompanying drawings, in which:

Fig. 1 is a block diagram of a first embodiment of a signal transmission system according to the present invention;
Fig. 2 is a block diagram of an example of the configuration of a control signal generation circuit of a transmitter according to the present invention;
Fig. 3 is a block diagram of an example of the configuration of a transmission area setting circuit of a transmitter according to the present invention;

Fig. 4 is a view of an example of the configuration of serial data transmitted by the transmitter according to the first embodiment;
Fig. 5 is a view of the structure of SAV and EAV of the transmitted serial data;
Fig. 6 is a block diagram of an example of the configuration of a serial data conversion circuit of the transmitter according to the present invention;
Fig. 7 is a block diagram of an example of the configuration of a clock reproduction circuit of the receiver according to the present invention;
Fig. 8 is a block diagram of an example of the configuration of a data reproduction circuit of the receiver according to the present invention;
Fig. 9 is a block diagram of an example of the configuration of a peripheral circuit of a display memory of the receiver according to the present invention;
Fig. 10 is a block diagram of a second embodiment of the signal transmission system according to the present invention;
Fig. 11 is a block diagram of an example of the configuration of an encoder according to the second embodiment;
Fig. 12 is a view of an example of block division according to the present invention;
Figs. 13A to 13C are views of an example of differential detection according to the present invention;
Fig. 14 is a view of an example of the structure of the serial data transmitted by the transmitter according to the second embodiment;
Fig. 15 is a block diagram of an example of the concrete configuration of the decoder in the receiver according to the second embodiment; and
Fig. 16 is a flowchart for explaining the operation of the transmitter of the signal transmission system according to the second embodiment.

DESCRIPTION OF THE PREFERRED EMBODIMENTS

Below, preferred embodiments will be described with reference to the accompanying drawings.

First Embodiment

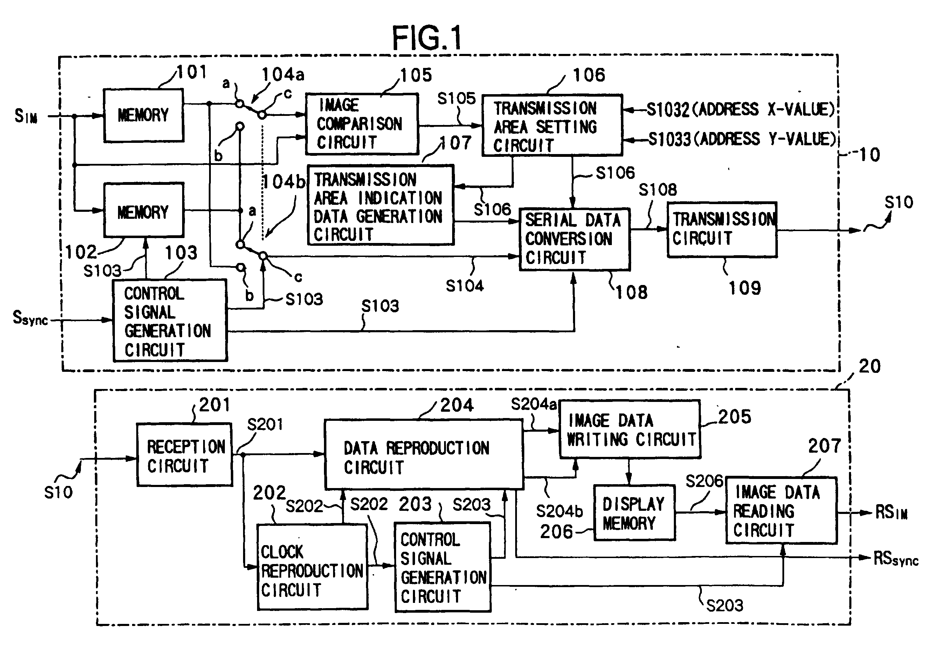

Figure 1 is a block diagram of a first embodiment of a signal transmission system according to the present invention.

The present signal transmission system is configured by a transmitter 10 and a receiver 20 as shown in Fig. 1.

As shown in Fig. 1, the transmitter 10 has a first memory 101 and a second memory 102 serving as the storing means, a control signal generation circuit 103, switching circuits 104a and 104b, an image comparison circuit 105, a transmission area setting circuit 106, a transmission area indication data generation circuit 107, a serial data conversion circuit 108, and a transmission circuit 109.

The first memory 101 and the second memory 102 alternately perform the writing and the reading of a image signal SIM to be transmitted for every frame by a control signal S103 having a period of two frames by the control signal generation circuit 103.

Note that the first memory 101 and the second memory 102 correspond to the two-dimensional structure of the input image to be transmitted, indicate addresses by an X-value and a X-value, and stores the image data corresponding to the addresses.

These address X-value and Y-value are generated at the control signal generation circuit 103.

The control signal generation circuit 103 generates the control signal S103 having a period of two frames upon receipt of synchronization signals Ssync and outputs the same to the first memory 101, second memory 102, switching circuits 104a and 104b, and the serial data conversion circuit 108.

Also, the control signal generation circuit 103 generates the X-value and the Y-value as the addresses of the first memory 101 and the second memory 102 and supplies the same to the transmission area setting circuit 106 and the serial data conversion circuit 108.

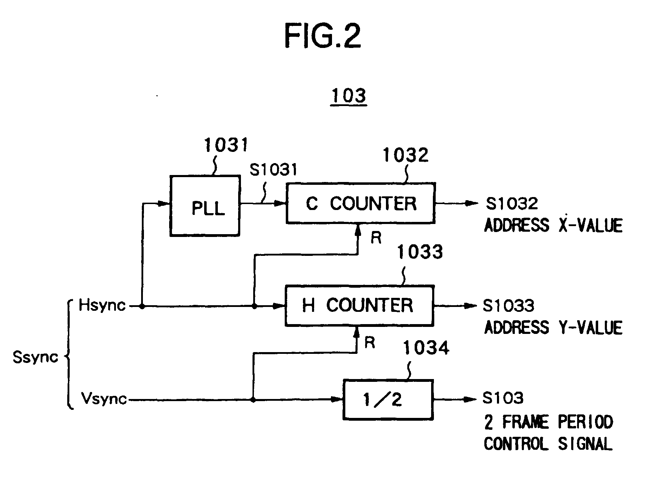

Figure 2 is a block diagram of a concrete example of the configuration of the control signal generation circuit 103.

As shown in Fig. 2, this control signal generation circuit 103 is configured by a PLL (Phase Locked Loop) circuit 1031, a C counter 1032, an H counter 1033, and a 1/2 frequency divider 1034.

In this control signal generation circuit 103, a horizontal synchronization signal Hsync and a vertical synchronization signal Vsync are input as the synchronization signals Ssync.

The horizontal synchronization signal Hsync is input to the PLL circuit 1031 and the H counter 1033.

A clock signal S1031 synchronous with the image is obtained by the PLL circuit 1031, and the clock signal S1031 is input to the C counter 1032. Then, the clock signal S1031 is counted at the counter 1032. The output thereof becomes an address X-value S1032 and is supplied to the transmission area setting circuit 106 and the serial data conversion circuit 108.

Also, the horizontal synchronization signal Hsync is counted at the H counter 1033. The output thereof becomes an address Y-value S1033 and is supplied to the transmission area setting circuit 106 and the serial data conversion circuit 108.

The vertical synchronization signal Vsync is input to the 1/2 frequency divider 1034 where it is divided in frequency by 2, whereby the 2 frame period control signal S103 is generated.

Also, the C counter 1032 is reset by the horizontal synchronization signal Hsync, and the H counter 1033 is reset by the vertical synchronization signal Vsync.

The switching circuit 104a is connected at its input terminal a to the output terminal of the first memory 101, connected at its input terminal b to the output terminal of the second memory 102, and connected at its output terminal c to the first input terminal of the image comparison circuit 105 and connects the output terminal c and the input terminal a or the input terminal b according to the control signal S103 by the control signal generation circuit 103.

Specifically, when the control signal S103 indicates the reading of the first memory 101 and the writing of the second memory 102, the output terminal c is connected to the input terminal a, while when the control signal S103 indicates the writing of the first memory 101 and the reading of the second memory 102, the output terminal c is connected to the input terminal b.

The switching circuit 104b is connected at its input terminal a to the output terminal of the second memory 102, connected at its input terminal b to the output terminal of the first memory 101, and connected at its output terminal c to the first input terminal of the serial data conversion circuit 106 and connects the output terminal c and the input terminal a or the input terminal b according to the control signal S103 by the control signal generation circuit 103.

Specifically, when the control signal S103 indicates the writing of the first memory 101 and the reading of the second memory 102, the output terminal c is connected to the input terminal a, while when the control signal S103 indicates the reading of the first memory 101 and the writing of the second memory 102, the output terminal c is connected to the input terminal b.

The image comparison circuit 105 compares the image data stored in the first memory 101 or the second memory 102 to be input to the first input terminal via the switching circuit 104a and the image data SIM being input at present input to the second input terminal and outputs the result as the signal S105 to the transmission area setting circuit 106 when the images are different.

The transmission area setting circuit 106 differentiates whether or not there is a change in the image data being input at present compared with the image data of the previous frame upon receipt of the output signal S105 of the image comparison circuit 105. When there was no change, it outputs the signal S106 to the transmission area indication data generation circuit 107 and the serial data conversion circuit 108 so as to designate a partial area of the image data and transmit the data representing the area of the image data and the image data in that area in one frame period and so as to change the designated area for every frame and transmit all image data in a plurality of frame periods.

Further, when there was a change in the image data being input compared with the image data of the previous frame, the transmission area setting circuit 106 outputs the signal S106 to the transmission area indication data generation circuit 107 and the serial data conversion circuit 108 so as to transmit the data representing the area of the image data and the image data in that area in one frame period when the area of the changed image is less than the predetermined area and so as to designate a partial area of the image data and transmit the data representing the area of the image data and the image data in that area in one frame period and so as to change the designated area for every frame and transmit all image data in a plurality of frame periods when the area of the changed image is more than the predetermined area.

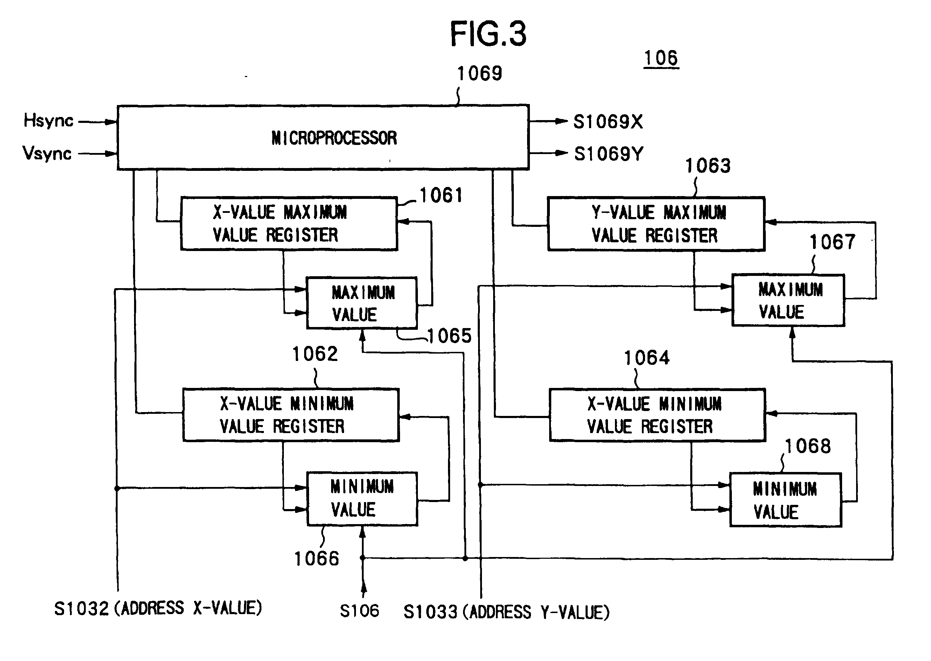

Figure 3 is a block diagram of a concrete example of the configuration of the transmission area setting circuit 106.

As shown in Fig. 3, this transmission area setting circuit 106 is configured by an X-value maximum value register 1061, an X-value minimum value register 1062, a Y-value maximum value register 1063, a Y-value minimum value register 1064, an X-value maximum value circuit 1065, an X-value minimum value circuit 1066, a Y-value maximum value circuit 1067, a Y-value minimum value circuit 1068, and a microprocessor 1069.

The transmission area setting circuit 106 has four registers of the X-value maximum value register 1061, X-value minimum value register 1062, Y-value maximum value register 1063, and Y-value minimum value register 1064. The microprocessor 1069 operates to store the minimum value and the maximum value of the address X-value and the minimum value and the maximum value of the address Y-value at which the image signals exist before the commencement of the comparison of the image signals for every frame.

The transmission area setting circuit 106 is configured so that the outputs of the registers 1061 to 1064 are connected to the X-value maximum value circuit 1065, X-value minimum value circuit 1066, Y-value maximum value circuit 1067, and Y-value minimum value circuit 1068 and so that the outputs of the circuits 1065 to 1068 are input again to the X-value maximum value register 1061, X value minimum value. register 1062, Y-value maximum value register 1063, and Y-value minimum value register 1064.

Also, the address X-value S1032 of the control signal generation circuit 103 is input to other inputs of the X-value maximum value circuit 1065 and the X-value minimum value circuit 1066, and the address Y-value S1033 by the control signal generation circuit 103 is input to other inputs of the Y-value maximum value circuit 1067 and the Y-value minimum value circuit 1068.

Further, these X-value maximum value circuit 1065, X-value minimum value circuit 1066, Y-value maximum value circuit 1067, and Y-value minimum value circuit 1068 are configured so as to operate only when the contents of the two images compared by the image comparison circuit 105 are different.

In the transmission area setting circuit 106 configured in this way, when two compared images have different contents, at the point of time when the comparison of one frame is completed, the contents of the X-value maximum value register 1061, X-value minimum value register 1062, Y-value maximum value register 1063, and Y-value minimum value register 1064 will indicate the maximum value and the minimum value of the address X-value and the maximum value and the minimum value of the address Y-value indicating areas in which the images are different.

Accordingly, the microprocessor 1069 supplied with the horizontal synchronization signal Hsync and the vertical synchronization signal Vsync reads these values. Thus it can be decided how far the range of the image data changed in one frame extends in both of the horizontal direction and the vertical direction.

Here, assume the case where the transmission band is 1/16 of the band originally possessed by the image for simplification.

At this time, when the range of the image data changed in one frame is less than 1/4 of the entire screen in both of the horizontal direction and the vertical direction, the amount of information of this range is 1/16 or less of the entire screen. This amount of information can be transmitted in one frame. In addition, there is no problem in viewing the image on the reception side.

Also, where the range of the image data changed in one frame is more than 1/4 of the entire screen in both of the horizontal direction and the vertical direction, the transmission of all data in one frame is impossible.

Further, there are oases where there is no image data changing during a frame exists.

In these oases, the entire screen is divided into subscreens of 1/16 the size, the image data corresponding to the different subscreens are transmitted for every frame, and all image data are updated over 16 frame periods.

Therefore, the microprocessor 1069 performs the following control.

1) When the range of the image data changed in one frame is less than 1/4 of the entire screen in both of the horizontal direction arid the vertical direction, the image area for transmission is made the equivalent of 1/4 the screen in the horizontal direction from the minimum value of the address X-value and the equivalent of 1/4 the screen in the vertical direction from the minimum value of the address Y-value.

2) For the case when the range of the image data changed in one frame is more than 1/4 of the entire screen in both of the horizontal direction and the vertical direction and the case where there is no image data changed in one frame, the vertical synchronization signal Vsync input to the microprocessor 1069 is counted. According to the count value, the address X-value and the address Y-value corresponding to the top left of the 16 subscreens formed when dividing the screen by 4 in the lateral direction and dividing it by 4 in the vertical direction are sequentially updated and designated for every frame. That subscreen is transmitted in one frame.

Also, the microprocessor 1069 outputs a transmission start address X-value S1069X and a transmission start address Y-value S1069Y according to the above rule.

The transmission area indication data generation circuit 107 generates the transmission area indication (addition) data based on the output signal S106 of the transmission area setting circuit 106 and outputs the same as the signal S107 to the serial data conversion circuit 108.

The serial data conversion circuit 108 receives the output signal S106 of the transmission area setting circuit 106 and the output signal S107 of the transmission area indication data generation circuit 107, converts the storage image data of the first memory 101 and the second memory 102 which are alternately input via the switching circuit 104b to the serial data, and outputs the same to the transmission circuit 109.

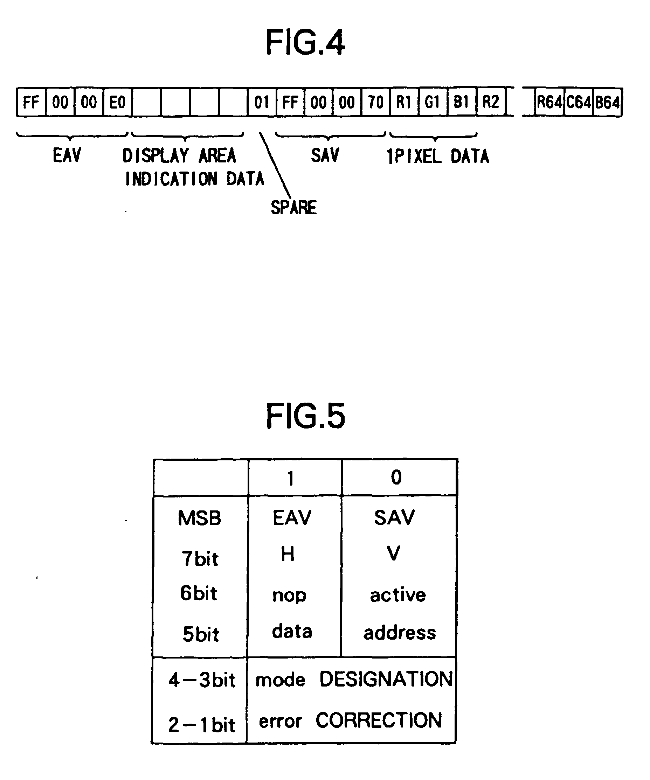

Figure 4 is a view of the data structure of the serial data to be transmitted, and Fig. 5 is a view for explaining the structure of SAV and EAV shown in Fig. 4.

The data structure of the serial data to be transmitted is a structure resembling that of the serial interface prescribed in SMPTE259M.

Namely, in SMPTE259M, the video data is sent in the order of Cb, Y, and Cr, but in the present embodiment, this part is replaced by RGB.

Also, the SAV (Start of Active Video) placed immediately before a digital valid line and the EAV (End of Active Video) placed immediately after the digital valid line are prepared.

Both the SAV and EAV are comprised by four words. The first three words are FF, 00, and 00 and are referred to as a preamble. The difference of SAV and EAV resides in that the fourth word is defined and prescribed as shown in Fig. 5.

Specifically, a case where the MSB (Most Significant Bit) is 1 is EAV, and a case where it is 0 is SAV.

The case where the seventh bit is 1 is H (horizontal period), and the case where it is 0 is V (vertical period).

The case where the sixth bit is 1 is nop (not operate), and the case where it is 0 is active.

The case where the fifth bit is 1 indicates data, and the case where it is 0 indicates an address.

The mode designation is carried out by the fourth bit and the third bit, and an error correction is indicated by the second bit and the first bit.

Note that, for synchronization, the values of FF and 00 used in the preamble are prohibited for both of the image data and the display area indication data.

Also, the area of the display area indication data is provided between SAV and EAV as shown in Fig. 4.

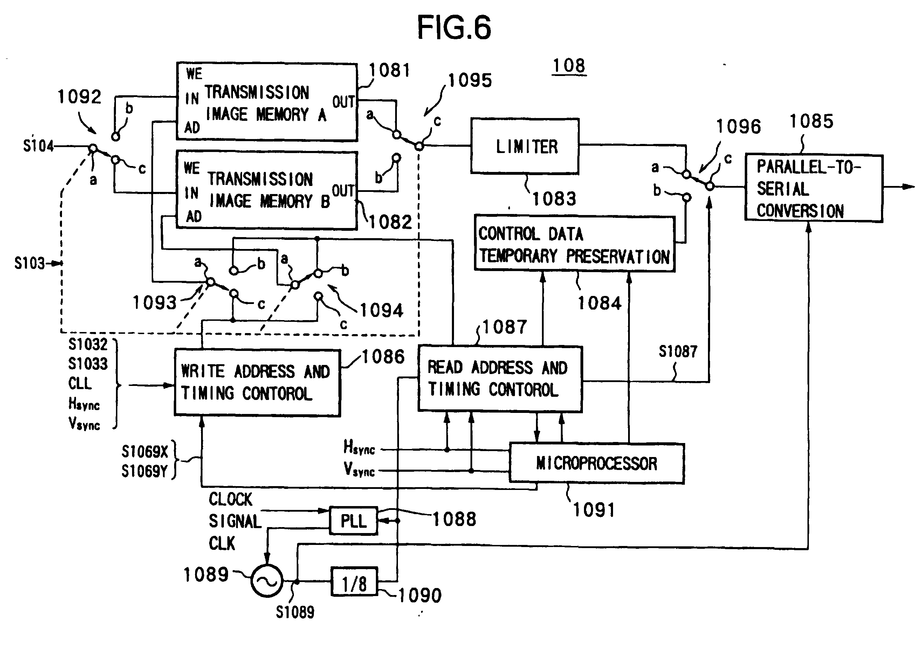

Figure 6 is a block diagram of a concrete example of the configuration of the serial data conversion circuit 108.

As shown in Fig. 6, this serial data conversion circuit 108 is configured by a first transmission image memory 1081, a second transmission image memory 1082, a limiter 1083, a control data temporary storage circuit 1084, a parallel-to-serial conversion circuit 1085, a write address and timing control circuit 1086, a read address and timing control circuit 1087, a PLL circuit 1088, a transmission clock signal generator 1089, a 1/8 frequency divider 1090, a microprocessor 1091, and switching circuits 1092 to 1096.

In the serial data conversion circuit 108, the first transmission image memory 1081 and the second transmission image memory 1082 each has a capacity corresponding to the image data to be transmitted in one frame interval.

Then, the serial data conversion circuit 108 switches the connection between the input terminal _a_ and the output terminal _b_ or _c_ of the switching circuits 1092 to 1094 by the control signal S103 by the control signal generation circuit 103 and alternately perform the writing and the reading for every frame for the first transmission image memory 1081 and the second transmission image memory 1082.

The data written in these first transmission image memory 1081 and second transmission image memory 1082 are part of the image data of either of the first memory 101 or the second memory 102 being read out at present. In the present example, it is a 1/16th part of the entire screen.

The write address and timing control circuit 1086 is used for taking out these image data.

Specifically, the write address and timing control circuit 1086 generates the address and controls the timing so as to read a 1/4 screen's worth of image data in the horizontal direction and the vertical direction from the portion at which the transmission start address X-value S1069X and Y-value S1069Y obtained from the microprocessor 1091 and the X-value and Y-value obtained from the control signal generation circuit 103 coincide from the first memory 101 or the second memory 102 and write the image data into the first transmission image memory 1081 or the second transmission image memory 1082.

On the other hand, the read address and timing control circuit 1087 generates the address and controls the timing go as to read the image data as shown in Fig. 4 from the memory among the transmission image memories 1081 and 1082 in which data has not been written.

The image data taken out in this way is passed through the limiter 1083 so as to remove the data of FF and 00. The output thereof is input to the parallel-to-serial converter 1085 and converted to serial data.

Also, the EAV, SAV, and other control signals and the display area indication data explained by Fig. 4 are processed at the microprocessor 1091 while the image data are read out from the first and second transmission image memories 1081 and 1082 and are written into the control data temporary storage circuit 1084. At the timing at which the transfer of the image data ends, the switching circuit 1096 serving as the data selector switches from the connection between the output terminal c and the input terminal a to the connection between the former and the input terminal b and converts the control signal and the display area indication data from a parallel to serial format by the output signal S1087 of the read address and timing control circuit 1087.

Note that the microprocessor 1091 displayed here is equivalent to the processor 1069 explained by the transmission area setting circuit 106 of Fig. 3.

Further, the PLL circuit 1088 is used for configuring the transmission clock signal generator 1089 synchronized with the clock signal of the input.

Then, the transmission clock signal S1089 by the transmission clock signal generator 1089 is divided in frequency by 8 at the 1/8 frequency divider 1090 and utilized as the basic clock of the read address and timing control circuit 1087. The transmission clock signal S1089 per se is used at the parallel-to-serial conversion circuit 1085.

The transmission circuit 109 modulates the serial data S108 by the serial data conversion circuit 108 by a high frequency signal, infrared ray, or the like and transmits the same as the serial radio signal S10 propagated in space.

The receiver 20 has a reception circuit 201 serving as the first restoring means, a clock reproduction circuit 202, a control signal generation circuit 203, a data reproduction circuit 204 serving as the second restoring means, an image data writing circuit 205, a display memory 206 serving as the storing means, and an image data reading circuit 207.

The reception circuit 201 receives the serial radio signal S10 transmitted from the transmitter 10 and propagated in space, demodulates the serial signal, and outputs the result to the clock reproduction circuit 202 and the data reproduction circuit 204.

The clock reproduction circuit 202 reproduces the clock signal S202 (reproduction clock signal RS202 and display clock signal DS202 mentioned later) required at the receiver 10 based on the serial signal S201 demodulated at the reception circuit 201 and supplies the same to the control signal generation circuit 203 and the data reproduction circuit 204.

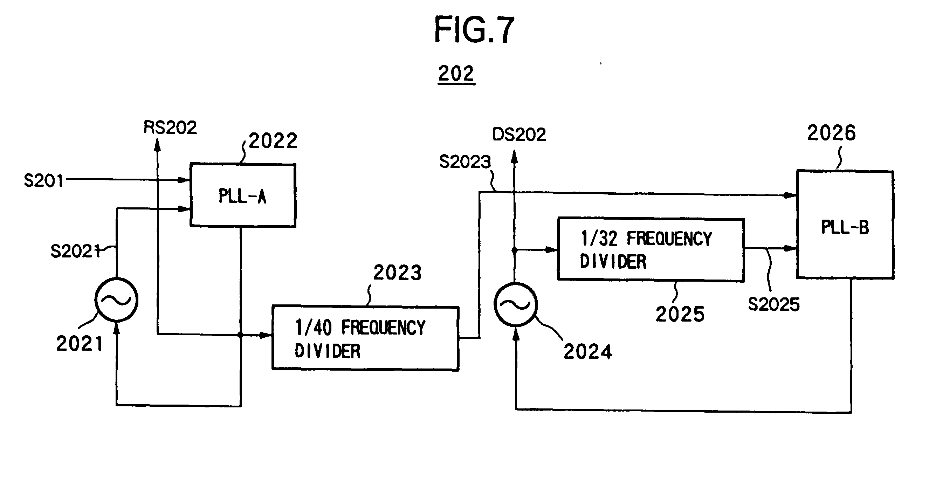

Figure 7 is a block diagram of a concrete example of the configuration of the clock reproduction circuit 202.

As shown in rig. 7, this clock reproduction circuit 202 is configured by a reproduction clock generator 2021, a first PPL, circuit 2022, a 1/40 frequency divider 2023, a display clock generator 2024, a 1/32 frequency divider 2025, and a second PLL circuit 2026.

This clock reproduction circuit 202 inputs the serial signal S201 demodulated at the reception circuit 201 and a reproduction clock S2021 of the reproduction clock generator 2021 to the first PLL circuit 2022.

In the first PLL circuit 2022, the phases of the input signals are compared, and the frequency and phase of the reproduction clock generator 2021 are controlled to coincide with the serial signal 201 by the output S2022 thereof.

In the present example, the transmission clock signal frequency is selected to be 1640 times the horizontal synchronization frequency. The reproduction clock signal RS202 from the first PLL circuit 2022 is synchronized with this transmission clock signal. By passing this signal through the 1/40 frequency divider 2023, a signal S2023 having a frequency 41 times the horizontal synchronization frequency is obtained.

Also, the display clock generator 2024 is configured so as to generate a signal having a frequency 1344 times the horizontal synchronization frequency. By passing this signal through the 1/32 frequency divider 2025, a signal S2025 similarly having a frequency 41 times the horizontal synchronization frequency can be obtained. By inputting these two signals to the second PLL circuit 2026 and returning the output thereof to the display clock generator 2024, a display cloak signal DS202 synchronized with the transmission cloak is obtained.

The control signal generation circuit 203 generates a control signal S203 upon receipt of the clock signal S202 by the clock reproduction circuit 202 and outputs the same to the data reproduction circuit 204 and the image data reading circuit 207.

The data reproduction circuit 204 reproduces an image data S204a, a transmission area indication data S204b, and a synchronization signal RSsync based on the clock signal S202 by the clock reproduction circuit 202, the control signal S203 by the control signal generation circuit 203, and the serial signal S201 demodulated at the reception circuit 201.

The image data writing circuit 205 temporarily stores the transmitted image data S204 based on the transmission area indication data S204b reproduced by the data reproduction circuit 204.

This stored image data is written into the display memory 206.

Also, the image data written in the display memory 206 is read out by the image data reading circuit 207 and output as the image data signal RSIM.

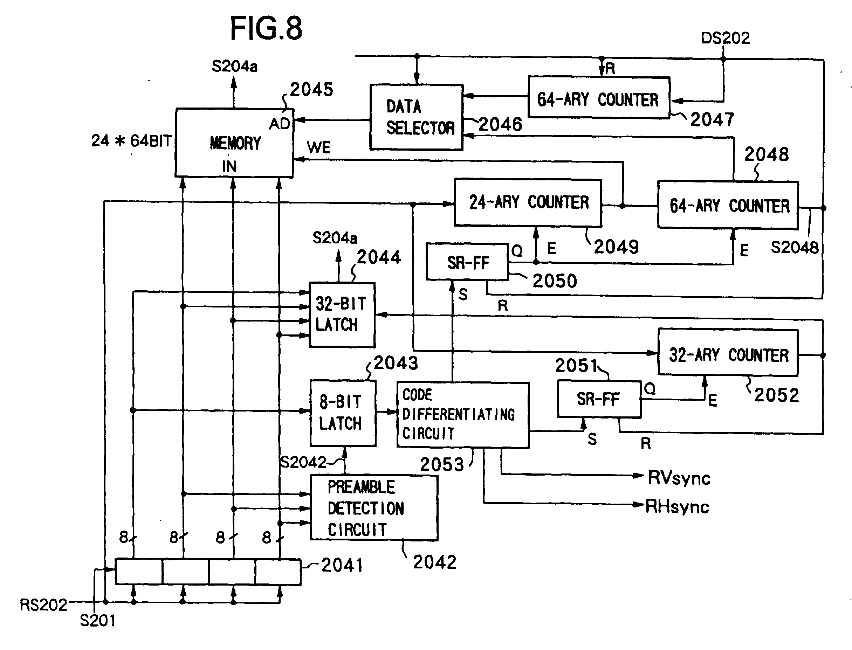

Figure 8 is a block diagram of a concrete example of the configuration of the data reproduction circuit 204.

As shown in Fig. 8, this data reproduction circuit 204 is configured by a shift register 2041, a preamble detection circuit 2042, an 8-bit latch 2043, a 32-bit latch 2044, a memory 2045, a data selector 2046, a first 64-ary counter 2047, a second 64-ary counter 2048, a 24-ary counter 2049, a first set and reset type flip-flop (SR-FF) 2050, a second SR-FF 2051, a 32-ary counter 2052, and a code differentiating circuit 2053.

In this data reproduction circuit 204, the serial signal S201 demodulated at the reception circuit 201 is input to the 32-bit shift register 2041.

The shift register 2041 shifts the reproduction clock signal RS202 by the clock reproduction circuit 202 as the timing signal by one bit for every clock signal.

The upper significant 24 bits of this shift register 2041 are connected to the preamble detection circuit 2042. When preamble detection circuit 2042 detects the preamble, that is, FF0000, it outputs an 8-bit latch signal S2042 to the 8-bit latch 2043.

The 8-bit latch 2043 receives as its input the lower significant 8 bits of the shift register 2041 and performs the latching at the timing at which the preamble is detected, that is, the timing of input of the 8-bit latch signal S2042.

The 8-bit signal latched here corresponds to the last fourth byte of the EAV or SAV, therefore this output is input to the code differentiating circuit 2053 and differentiated in the code content by the code differentiation circuit 2053.

Though a detailed explanation is omitted, the SR-FF 2050 or 2051 is set by the output from the code differentiating circuit 2053, the count of the 24-ary counter 2049 or the 32-ary counter 2052 is advanced, the serial signal S201 is shifted at the shift register 2041, and the data in the shift register 2041 is fetched into the memory 2045 or the 32-bit latch 2044 at the point of time when the count of the 24-ary counter 2049 or the 32-ary counter 2052 is ended.

Then, the data fetched into the memory 2045 is utilized as the image data S204a, and the data fetched into the 32-bit latch 2044 is utilized as the display area indication data S204b.

Also, simultaneously with the ending of the counting of the 64-ary counter 2048 or the 32-ary counter 2052 receiving the output of the 24-ary counter 2049, the SR-FF 2050 or 2051 is reset by the output of the counter, and the signal from the next code differentiating circuit 2053 is waited for.

Note that, for the image data, in this example, data of 64 bytes x 3 colors are transmitted in one horizontal scanning section, therefore they are fetched once into the memory 2045.

Also, the address of the memory 2045 is controlled by the display memory control signal S2048 by the 64-ary counter 2048 and selected by the data selector 2046 so that the writing is carried out synchronously with the transmission clock and the reading is carried out synchronously with the display clock signal DS202.

Further, also a reproduction horizontal synchronization signal RVsync and a reproduction vertical synchronization signal RHsync are generated by a similar method.

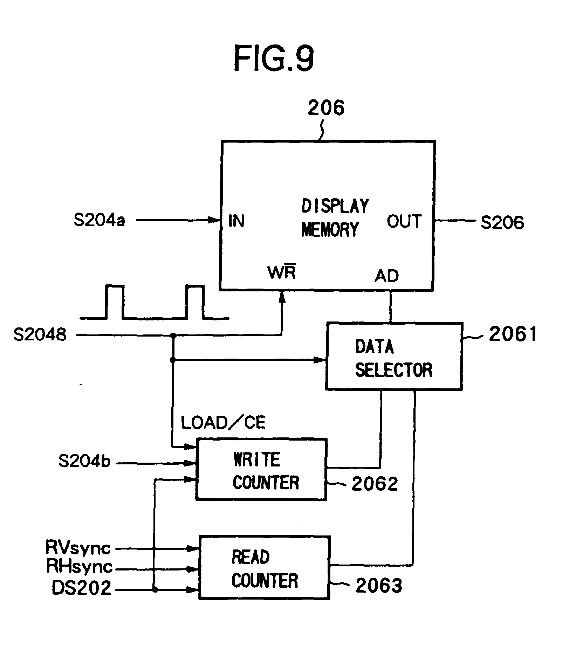

Also, Fig. 9 is a block diagram of the peripheral circuit of the display memory 206 not illustrated in Fig. 8.

As shown in Fig. 9, the peripheral circuit is configured by a data selector 2061, a write counter 2062, and a read counter 2063.

In this peripheral, circuit, the address data of the display memory 206 is switched at the data selector 2061 by the display memory control signal S2048 output from the 64-ary counter 2048 of the data reproduction circuit 204.

Specifically, when the display memory control signal S2048 is at a low level, the read address generated at the reading counter 2063 is selected by the reproduction vertical synchronization signal RVsync, reproduction horizontal synchronization signal RHsync, and display clock signal DS202. The reproduced image data S206 is read out from the display memory 206 according to this address.

On the other hand, when the display memory control signal S2048 is at a high level, the display memory 206 enters into the writing mode, and the image data S204a from the memory 2045 of the data reproduction circuit 204 is written at the address generated at the write counter 2062 based on the display area designation data S204b.

At thin time, there is no output of the display memory 206, and there is no reproduced image data either, so this corresponds to a so-called blanking period.

Next, an explanation will be made of the operation of the signal transmission system of Fig. 1 configured by the transmitter 10 and the receiver 20 mentioned in detail heretofore.

In Fig. 1, the input image signal SIM is input to the first memory 101 and the second memory 102, and a synchronization signal Ssync containing the horizontal and vertical synchronization signals is input to the control signal generation circuit 103.

In the control signal generation circuit 103, a control signal S103 having a period of 2 frames upon receipt of the synchronization signal Ssync is generated and output to the first memory 101, second memory 102, switching circuits 104a and 104b, and serial data conversion circuit 108.

Also, in the control signal generation circuit 103, the X-value S1032 and the Y-value S1033 as the addresses of the first memory 101 and the second memory 102 are generated and supplied to the transmission area setting circuit 106 and the serial data conversion circuit 108.

Then, the first memory 101 and the second memory 102 are alternately written into and read from for every frame by the control signal S103 having the period of 2 frames.

Further, the output image data of the first memory 101 or the second memory 102 arriving via the switching circuit 104a is input to the image comparison circuit 105 and compared with the input image signal SIM being input at present. The result of this comparison is input to the transmission area setting circuit 106 as the signal S105.

In the transmission area setting circuit 106, upon receipt of the output signal S105 of the image comparison circuit 105, the differentiation whether or not there was a change in the image data being input at present compared with the image data of the previous frame is performed.

When the result of the differentiation is that there was no change, the signal S106 is output to the transmission area indication data generation circuit 107 and the serial conversion circuit 108 so that a partial area of the image data is designated and the data representing the area of the image data and the image data in that area are transmitted in one frame period and so that the designated area is changed for every frame and all image data are transmitted in a plurality of frame periods.

When the result of the differentiation is that there was a change in the image data being input compared with the image data of the previous frame, in the transmission area setting circuit 106, the signal S106 is output to the transmission area indication data generation circuit 107 and the serial data conversion circuit 108 so that the data representing the area of the image data and the image data in that area are transmitted in one frame period when the area of the changed image is less than a predetermined area and so that a partial area of the image data is designated and the data representing the area of the image data and the image data in that area are transmitted in one frame period and so that the designated area is changed for every frame and all image data are transmitted in a plurality of frame periods when the area of the changed image is more than the predetermined area.

Based on the output signal S106 of the transmission area setting circuit 106, the transmission area indication data is generated at the transmission area indication data generation circuit 107, and the transmission area indication data and the image data in the transmission area are converted to serial data at the serial data conversion circuit 108 and the result is output as the signal S108 to the transmission circuit 109.

Then, in the transmission circuit 109, the serial data signal S108 is demodulated by a high frequency signal, infrared ray, or the like and it is transmitted as the signal S10 to be propagated in space.

The serial radio signal S10 transmitted from the transmitter 10 as described above is received at the reception circuit 201 of the receiver 20.

In the reception circuit 201, the serial radio signal S10 is demodulated and output as the serial signal S201 to the clock reproduction circuit 202 and the data reproduction circuit 204.

In the clock reproduction circuit 202, based on the serial signal S201 demodulated at the reception circuit 201, the clock signal S202 required at the receiver 20, concretely the reproduction clock signal RS202 and the display clock signal DS202, are reproduced and supplied to the control signal generation circuit 203 and the data reproduction circuit 204.

In the control signal generation circuit 203, the control signal S203 is generated upon receipt of the clock signal S202 by the clock reproduction circuit 202 and it is output to the data reproduction circuit 204 and the image data reading circuit 207.

In the data reproduction circuit 204, the image data S204a, transmission area indication data S204b, and synchronization signal RSsync are reproduced based on the clock signal S202 by the clock reproduction circuit 202, the control signal S203 by the control signal generation circuit 203, and the serial signal S201 demodulated at the reception circuit 201.

Then, the transmitted image data S204 is temporarily stored into the image data writing circuit 205 based on the transmission area indication data S204b reproduced by the data reproduction circuit 204.

The image data stored in this image data writing circuit 205 is written into the display memory 206.

Also, the image data written in the display memory 206 is read out by the image data reading circuit 207 and output as the image data signal RSIM.

As explained above, according to the first embodiment, since provision is made of the transmitter 10 for storing the input image data, differentiating whether or not there is a change in the image data being input compared with the image data of the previous frame, setting the area of the image data to be transmitted according to the result of the differentiation, adding data representing the area to the image data to be transmitted, converting the image data to be transmitted and the data representing the area to a serial signal, and transmitting the serial signal wirelessly and of the receiver 20 for receiving the transmitted serial radio signal S10, restoring the same to a serial signal, restoring the transmitted image data and the data representing the area of the image data from the restored serial signal, storing the transmitted image data based on the data representing the area, and reading the stored image data at the predetermined timing, the following effects are obtained.

Namely,

A) in applications for transmitting a wideband RGB signal in space,

1) even in the case where use is made of a space transmitting means having a narrower transmission bandwidth compared with the band of the origin signal,

2) where the amount of change of image data between frames is smaller than the bandwidth of the space transmitting means,

3) the image data of the changed part is transmitted together with the position information thereof, and

4) on the receiver side, only the image data changed by the original signal can be updated based on this position information.

Due to this, the image data the same as that on the transmission side can be reproduced at the reception side. This is very useful in practical use.
B) Also,

1) in the case where the amount of change of image data between frames is larger than the bandwidth of the space transmitting means,

2) the screen is divided to subscreens corresponding to the image data sent with the transmission bandwidth,

3) all subscreens are transmitted by a plurality of frames, and

4) on the reception side, these transmitted subscreens can be combined.

Due to this, while a certain time is required, it is possible to completely restore the original signal.

Particularly, in applications of business presentations where the original signal is generated on the computer side, this is transmitted in space, and a large screen display device such as a projector is used as the reception side, the part in which the image data actually frequently changes is a partial part such an the cursor. In the present embodiment, in many cases, this can be covered by the condition of A) described above, so there is no problem in practical use.

Note that when the entire screen is switched, the situation as in B) described above may arise, but by allowing a certain degree of time (about 0.25 second where for example an XGA signal is transmitted in the band of about 100 MHz) to elapse, the image data can be restored without loss, therefore there is little problem in practical use.

Accordingly, according to the present embodiment, it becomes possible to make the signal line between the computer and the projector wireless. Namely, there are the advantages that the restriction of the position of arrangement is eliminated and it becomes possible to sharply raise the usefulness in practice.

Second Embodiment

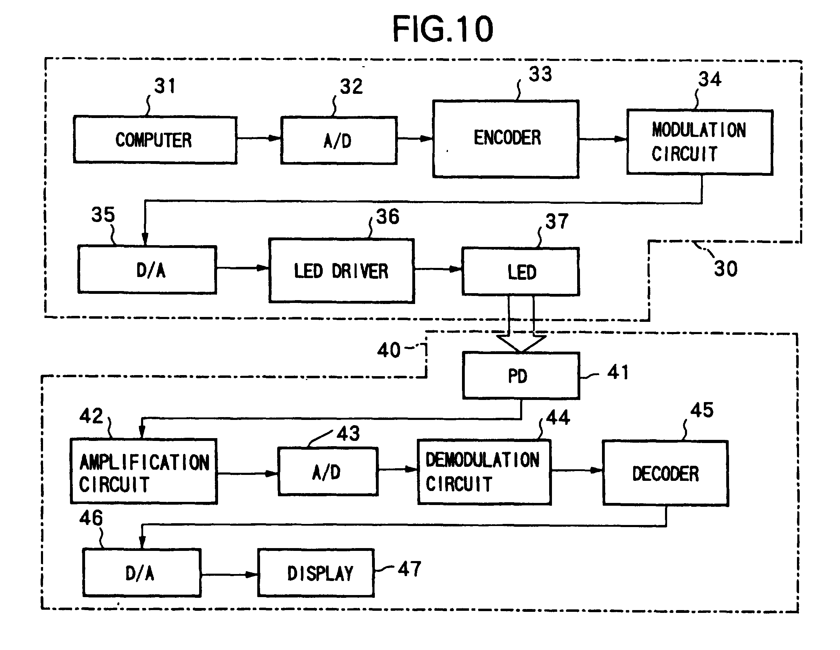

Figure 10 is a block diagram of a second embodiment of the signal transmission system according to the present invention.

In the signal transmission system according to the second embodiment, the transmission processing and the reception processing of the image data are basically similar to those of the signal transmission system according to the first embodiment.

The differences of the signal transmission system according to the second embodiment from the signal transmission system according to the first embodiment resides in that, even if a fault occurs in the middle of communication, it is possible to restore the original image in that period at the maximum due to the compulsory transmission of the original image information at a certain period.

Below, an explanation will be made of the signal transmission system of Fig. 10 focusing on points different from the first embodiment.

The present signal transmission system is configured by a transmitter 30 and a receiver 40 as shown in Fig. 10. It transmits the image information generated by a computer arranged at the transmitter side for example wirelessly and displays it a monitor, projector, or other display arranged at the receiver side.

As shown in Fig. 10, the transmitter 30 has a computer 31, an analog/digital (A/D) conversion circuit 32, an encoder (differential detection circuit) 33, a modulation circuit 34, a digital/analog (D/A) conversion circuit 35, a LED (Light Emitting Diode) driver 36, and a LED 37 for emitting light of a predetermined wavelength, for example, an infrared ray.

Among these components, the encoder 33 is a circuit portion including functions of the first memory 101, second memory 102, control signal generation circuit 103, switching circuits 104a and 104b, image comparison circuit 105, transmission area setting circuit 106, transmission area indication data generation circuit 107, and serial data conversion circuit 108 of Fig. 1.

Further, the modulation circuit 34, D/A conversion circuit 35, LED driver 36, and LED 37 correspond to the transmission circuit 109 portion of Fig. 1.

The computer 31 generates the image signal to be displayed on the display arranged on the receiver 40 side and outputs for example the generated original image signal as an analog signal.

The A/D conversion circuit 32 converts the original image signal output from the computer 31 from an analog signal to digital signal and supplies the same to the encoder 33.

The encoder 33 has a frame memory, detects the difference between the image data stored in the frame memory and the image data being input for each of the colors R, G, and B for every predetermined divided block as for example described later, differentiates whether or not the image data being input at present has changed compared with the image data of the previous frame, and, where there is no change, performs control so as to designate a partial area of the image data and transmit data representing the area of the image data and the image data in that area in one frame period and so as to change the designated area for every frame and transmit all image data in a plurality of frame periods.

Further, when the image data being input has changed compared with the image data of the previous frame, the encoder 33 performs control so as to transmit the data representing the area of the image data and the image data in that area in one frame period when the area of the changed image is less than the predetermined area and so as to designate a partial area of the image data and transmit the data representing the area of the image data and the image data in that area in one frame period and so as to change the designated area for every frame and transmit all image data in a plurality of frame periods when the area of the changed image is more than the predetermined area.

Here, assume a case where the transmission band is 1/16 of the band of the original image in the same way as the case of the first embodiment for simplification.

At this time, when the range of the image data changed in one frame is less than one-quarter of the entire screen in both of the horizontal direction and the vertical direction, the amount of the information in this range is less than 1/16 of the entire screen. This amount of information can be transmitted during one frame. In addition, no problem arises in viewing at the reception side.

Also, where the range of the image data changed in one frame is more than one-quarter of the entire screen in both of the horizontal direction and the vertical direction, the transmission of all data in one frame is impossible.

Further, there are also cases where no image data changes during one frame.

In these cases, the entire screen is divided into subscreens of 1/16, the image data corresponding to a different subscreen is transmitted for every frame, and all image data are updated in 16 frame periods.

The above function is similar to that of the first embodiment, but there is also the chance that the image data will not change at all (static image or the like) or the transmission data will be blocked in the middle of the route (for example, a person will cross the infrared ray during the transmission), therefore the encoder 33 counts for example the vertical synchronization signal Vsync of the image data and performs controls so as to compulsorily transmit the image data of one frame irrespective of the existence/nonexistence of a differential detection block at a certain period, for example, at a period of 5 seconds, in addition to the above function.

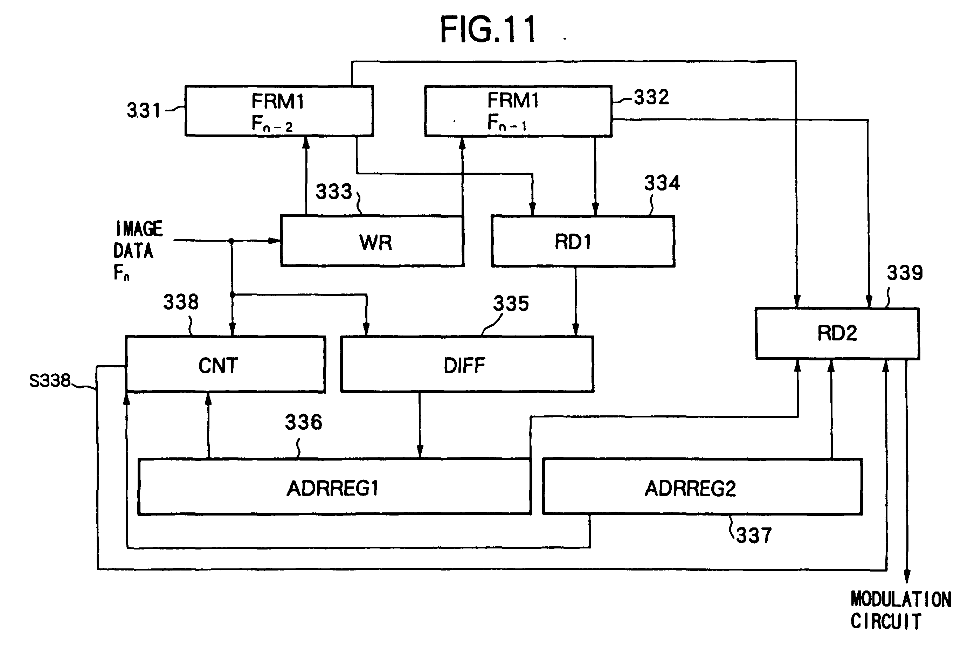

Figure 11 is a block diagram of the example of the configuration of the encoder 33 according to the second embodiment.

The encoder 33 has, as shown in Fig. 11, a first frame memory (FRM1) 331, a second frame memory (FRM2) 332, a write circuit (WR) 333, a first read circuit (RD1) 334, a differentiation circuit (DIFF) 335, a first address register (ADRREG1) 336, a second address register (ADRREG2) 337, a counter (CNT) 338, and a second read circuit (RD2) 339.

The principal function of the encoder 33 having such a configuration resides in the differential detection function.

The differential detection is differentiated by computing the difference in the luminance level among frames by colors.

Now, assume the image data being input is Fn, the image data one frame before the present frame is Fn-1, and the image data two frames before the present frame is Fn-2. Then, assume that the image data Fn-2 two frames before the present data is written in the frame memory 331, and the image data Fn-1 one frame before the present data is written in the frame memory 332.

First, an explanation will be made of the method of the differential operation.

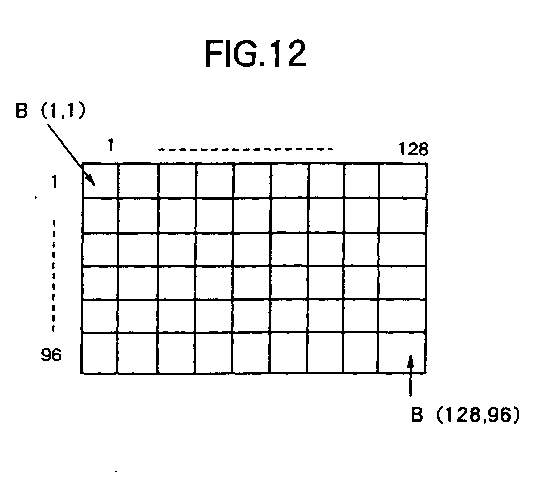

As shown in Fig. 12, the image of one frame is divided to several blocks. At this time, the method of division may be changed by considering the band of the transmission path, the sensitivity of the movement detection in the vertical and lateral directions, etc.

For example, the XGA (1024 x 768) is divided into frames each comprised of blocks of 8 pixels in the horizontal direction and 8 pixels in the vertical direction or 12288 blocks.

The divided blocks are defined as B(1,2) (left top)..., and B(128,96) (right bottom). The sum of the luminance values of the pixels in each block (64 pixels in this case) is defined as SUM, and the SUM of the frame Fn and a block B(x,y) is defined as SUM(Fn,B(x,y)).

Further, for example SUM (B(1,1)) can be represented as follows.

$$SUM(B(1,1)) \qquad (1)$$
$$= \Sigma(P(1,1),\ P(2,1),...,\ P(7,8),\ P(8,8))$$

Note that, $P(x,y)$ is the luminance of the address $(x,y)$.

In the differential operation, the difference of SUM of the same block address of colors is calculated among frames. Specifically, the operation of Equation (2) is carried out for all blocks by colors.

$$|SUM(Fn,B(x,y))-SUM(Fn-1,B(x,y))| \qquad (2)$$

Then, in the comparison with the threshold value TH1 set in advance, when the following equation (3) is true, it is determined that there was a luminance change, that is, the image data changed.

$$|SUM(Fn,B(x,y))-SUM(Fn-1,B(x,y))|\geq TH1 \qquad (3)$$

The threshold value TH1 is the value for determining whether or not it changed and is determined by considering an S/N of the image and the level of the motion detection.

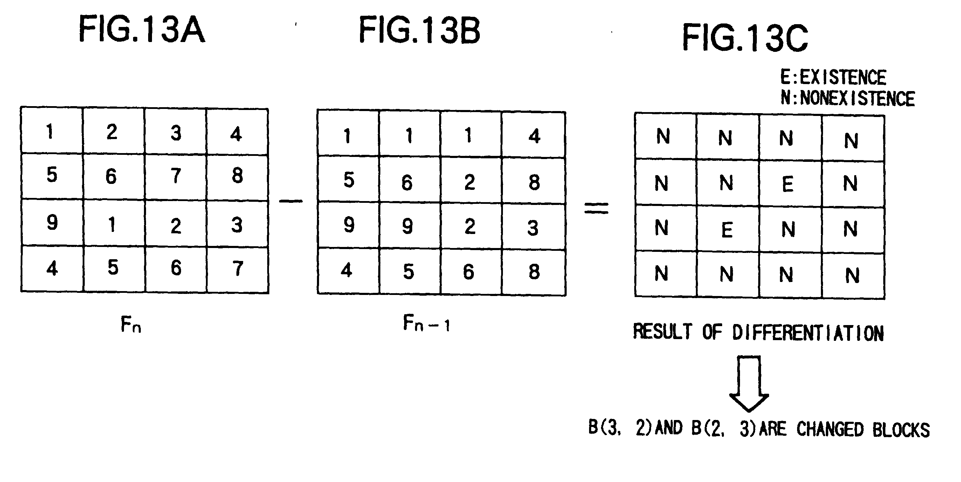

Figure 13 is a view of an example of the differential detection.

In this example, the frame is divided into 4 x 4, and the threshold value TH1 of the changed block is set to 3 or more.

The numerals of the matrixes of the frames Fn and Fn-1 shown in Figs. 13A and 13B indicate the SUM of the blocks, and the existence/nonexistence of the result of the differentiation of Fig. 13C indicates the existence/nonexistence of the change.

In this example, B(3,2) and B(2,3) are judged as changed blocks.

Further, the write circuit 333 writes the data while switching the first frame memory 331 and the second frame memory 332 for every frame.

The first read circuit 334 reads the data while switching the first frame memory 331 and the second frame memory 332 for every frame.

Then, the write circuit 333 and the first read circuit 334 are controlled so that the frame memory to be accessed is alternately replaced.

As a part of a transmission area setting means, the differentiation circuit 335 differentiates equation (3), that is, compares the difference of SUM of the same block addresses of colors among frames found by equation (2) and the threshold value TH1 for all blocks of the image data and differentiates whether or not an absolute value of the SUM is more than the threshold value TH1, and writes the block address in the case of a positive differentiation result (true) in the first address register 336 and the second address register 337.

At this time, the differentiation circuit 335 switches and accesses the first address register 336 and the second address register 337 for every frame.

Further, there is also the chance that the image data will not change at all (static image or the like) or the transmission data will be blocked in the middle of the route (for example a person crossing the infrared ray during transmission), therefore if a certain period T, for example 5 seconds, elapses after the start of counting the vertical synchronization signal Vsync of the image data, the counter 338 issues a compulsory transmission command S338 for sending all of the image data of one frame irrespective of the existence/nonexistence of the differential detection block to the second read circuit 339.

Further, the counter 338 reads the data of the first address register 336 and the second address register 337 and issues the compulsory transmission command to the second read circuit 339 even in the case where the number of the differential detection block is 0.

The second read circuit 339 reads the block addresses of the first address register 336 and the second address register 337 and reads the image data from the first frame memory 331 and the second frame memory 332.

At this time, the second read circuit 339 accesses the frame memory identical to that of the first read circuit 334. When the first read circuit 334 is in an idling state, the second read circuit 339 accesses the corresponding frame memory.

Further, the second read circuit 339 ignores the differential detection block until the image transmission of one frame is ended when receiving the compulsory transmission command S338 from the counter 338.

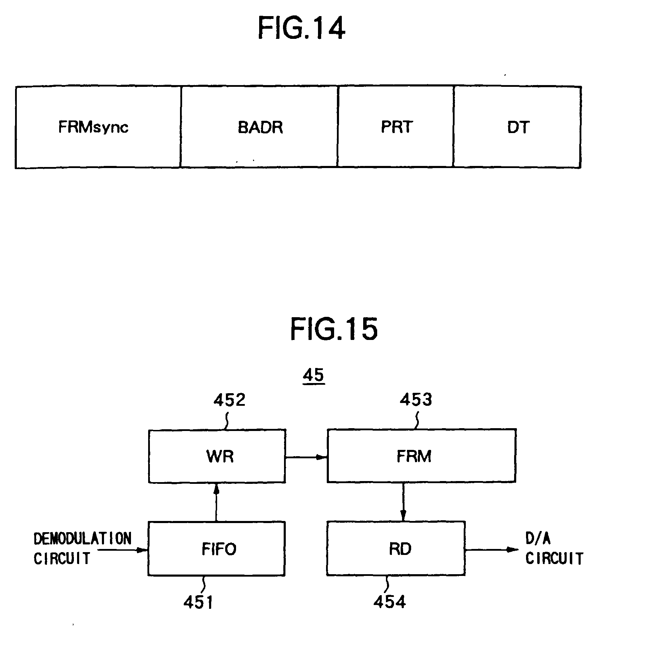

Further, the second read circuit 339 adds the information of the block address BADR, an identification information FRMsync of the frame head packet, and a parity PRT when sending the image data DT as shown in for example Fig. 14 and generates the transmission serial data.

Note that the frame synchronization signal FRMsync shown in Fig. 14 corresponds to EAV and SAV explained in relation to Fig. 4, and the block address BADR corresponds to the display area indication data according to the present invention.

The modulation circuit 34 performs for example frequency modulation (FM modulation) of the transmission serial data output from the encoder 33 to a predetermined format.

The D/A Conversion circuit 35 converts the transmission serial data modulated at the modulation circuit 34 from a digital signal to an analog signal and supplies the same to the LED driver 36.

The LED driver 36 drives the LED 37 in accordance with the analog modulation signal and has the image data generated by the computer 31 emitted as an infrared ray signal.

The receiver 40 has, as shown in Fig. 10, a photodiode (PD) 41, an amplification circuit 42, an A/D conversion circuit 43, a demodulation circuit 44, a decoder 45, a D/A conversion circuit 46, and a monitor, projector, or other display 47.

Note that the portion of the photodiode (PD) 41, amplification circuit 42, and A/D conversion circuit 43 corresponds to the reception circuit 201 of Fig. 1, the demodulation circuit 44 corresponds to the portion of the data reproduction circuit 204 and the clock reproduction circuit 202 of Fig. 1, and the decoder 45 corresponds to the portion of the image data write circuit 205, display memory 206, and image data read circuit 207 of Fig. 1.

The photodetector 41 receives the original image data by the infrared ray emitted from the LED 37 of the transmitter 30 and converts the same to an electric signal in accordance with the received light level.

The amplification circuit 42 amplifies the image signal of the analog electric signal by the photodetector 41 with a predetermined gain.

The A/D Conversion circuit 42 converts the analog image signal output from the amplification circuit 42 to the digital signal and supplies the same to the demodulation circuit 44.

The demodulation circuit 44 performs the predetermined demodulation processing by receiving the received digital image signal, reproduces the signal of the format added with the image data at the block address, and supplies the same to the decoder 45.

The decoder 45 calculates the address of the original image data from the block address of the data by the demodulation circuit 44, writes the image data in the embedded frame memory, and outputs the image data stored in the frame memory to the D/A conversion circuit 46 at the predetermined timing.

Figure 15 is a block diagram of a concrete example of configuration of the decoder in the receiver according to the present second embodiment.

As shown in Fig. 15, the decoder 45 has an FIFO (First-In First-Out) memory 451, a write circuit (WR) 452, a frame memory (FRM) 453, and a read circuit (RD) 454.

The FIFO memory 451 sequentially stores the data having the format of (block address + image data) sent from the demodulation circuit 44 and outputs the same.

The write circuit 452 calculates the address of the original image data from the block address of the data from the FIFO memory 451 and writes the image data in the frame memory 453 when the read circuit 454 is in the idling state.

The read circuit 454 reads the image data from the frame memory 453 matching the timing of the D/A circuit 46 and supplies the same to the D/A circuit 46.

Note that, in the decoder 45, since the frame head packet information (frame synchronization signal) is also contained in the information sent from the demodulation circuit 44, the control is performed so as to avoid overtaking the memory when reading the image data from the frame memory 453 by the read circuit 454 and writing the image data to the frame memory 453 by the write circuit 352. Further, the FIFO memory 451 is necessary for this.

The D/A conversion circuit 46 converts the digital image data by the decoder 45 to the analog image data and supplies the same to the display 47.

Next, an explanation will be made of the operation of the signal transmission system according to the present second embodiment.

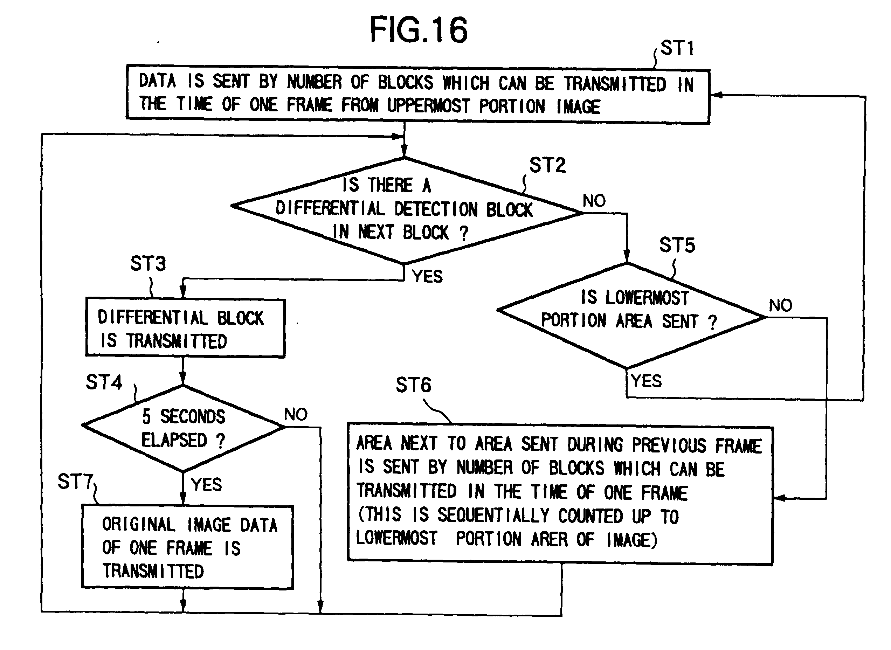

Note that, the explanation will be made of the operation of the encoder 33 as the principal part of the transmitter 30 in relation to the flowchart of Fig. 16.

In the computer 31 on the transmission side, the image signal to be displayed on the display 47 arranged on the receiver 40 side is generated, and the generated original image signal is output as the analog signal.

This analog original image signal is converted to the digital image signal at the A/D conversion circuit 32 and supplied to the encoder 33.

In the encoder 33, the image data Fn is input to the write circuit 333, the differentiation circuit 335, and the counter 338.

In the write circuit 333, the input image data is written while switching the first frame memory 331 and the second frame memory 332 for every frame.

For example, the input image data Fn is written into the second frame memory 332 by the write circuit 333.

At this time, the image data Fn-1 one frame before the present image data stored in the first frame memory 331 is read out by the first read circuit 334 and supplied to the differentiation circuit 335.

Also in this first read circuit 334, the read operation is performed while switching the first frame memory 331 and the second frame memory 332 for every frame.

Then, the write circuit 333 and the first read circuit 334 are controlled so that the frame memory to be accessed is alternately replaced.

In the differentiation circuit 335, the difference of the SUM at the same block address of colors with the image data Fn-1 one frame before the present image data among the frames is found for all blocks of the input image data Fn and the differentiation of whether or not the absolute value of the difference of SUM is the threshold value TH1 or more is carried out.

Then, the block address of the case of the positive differentiation result (true) is written into the first address register 336 and the second address register 337.

At this time, the differentiation circuit 335 switches and accesses the first address register 336 and the second address register 337 for every frame.

Then, in the second read circuit 339, the block addresses of the first address register 336 and the second address register 337 are read out and the image data from the first frame memory 331 and the second frame memory 332 based on this are read.

In the encoder 33, the differential detection is repeated while switching the above operation for the frame memories and the address registers for every frame.

In this case, as shown in Fig. 16, the data is sent by exactly the number of blocks which can be transmitted in the time of one frame from for example the uppermost portion of the image of the block (ST1).

Then, the differentiation circuit 335 differentiates whether or not there is a differential detection block in the next frame (ST2).

When it is differentiated at step ST2 that there was a differential detection block, the differential block is transmitted (ST3). When 5 seconds have not elapsed (ST4), the operation routine returns to the processing of step ST2.

On the other hand, when it is differentiated at step ST2 that there is no differential detection block, the area next to the area sent during the previous frame is sent by exactly the number of blocks which can be transmitted in the time of one frame until the lowermost portion area is sent. This is sequentially counted up to the lowermost portion area of the image (ST5, ST6).

Further, with the counter 338 of the encoder 33, there is also the chance that the image data will not change at all (static image or the like) or the transmission data will be blocked in the middle of the route (for example a person crossing the infrared ray during transmission), therefore if the period T set in advance, for example 5 seconds, elapses after the start of counting the vertical synchronization signal Vsync of the image data, the compulsory transmission command S338 for instructing to send all of the image data of one frame irrespective of the existence/nonexistence of the differential detection block is issued to the second read circuit 339.

Further, in the counter 338, the data of the first address register 336 and the second address register 337 are read out and the compulsory transmission command is output to the second read circuit 339 even in the case where the number of the differential detection blocks is 0.

In the second read circuit 339, when receiving the compulsory transmission command S338 from the counter 338, the differential detection block is ignored until the image transmission of one frame is ended, and the original image data of one frame is transmitted (ST7).

Then, in the second read circuit 339, when sending the image data DT, the transmission serial data obtained by adding the information of the block address BASDR, the identification information FRMsync of the frame head packet, and the parity PRT are output to the modulation circuit 34.

In the modulation circuit 34, for example frequency modulation (FM modulation) Is performed on the transmission serial data output from the encoder 33 to a predetermined format. In the D/A conversion circuit 35, the modulated signal is converted from a digital signal to an analog signal and supplied to the LED driver 36.

In the LED driver 36, the LED 37 is driven in accordance with the analog modulated signal. By this, image data generated by the computer 31 is emitted as the infrared ray signal to the receiver 40.

In the receiver 40, the original image data by the infrared ray emitted from the LED 37 of the transmitter 30 is received by the photodetector 41 and converted to an electric signal in accordance with the received light level, and amplified at the amplification circuit 42 with a predetermined gain.

The analog image signal output from the amplification circuit 42 is converted to a digital signal by the A/D conversion circuit 42 and supplied to the demodulation circuit 44.

In the demodulation circuit 44, upon receipt of the received digital image signal, the predetermined demodulation processing is performed, the signal of the format added with the image data at the block address is reproduced, and supplied to the decoder 45.

In the decoder 45, the data got the format of (block address + image data) sent from the demodulation circuit 44 is sequentially stored and output to the write circuit 452.

In the write circuit 452, the address of the original image data is calculated from the block address of the data from the FIFO memory 451. Then, when the read circuit 454 is in the idling state, the image data is written into the frame memory 453 based on the calculated address by the write circuit 452.

Then, in the read circuit 454, the image data is read out from the frame memory 453 matching with the timing of the D/A circuit 46 and supplied to the D/A circuit 46.

In the D/A circuit 46, the digital image data by the decoder 45 is converted to an analog image data and supplied to the display 47.

The display 47 restores and displays the image data without loss.

Summarizing the effects of the embodiments, as explained above, according to the present second embodiment, there are the advantages that not only can the amount of the transmission information be reduced and effects obtained similar to the effects by the first embodiment, but it also becomes possible to restore the original image in the period at the maximum even in the case where a fault occurs in the middle of communication since the original image information is compulsorily transmitted at a certain period.

Also, since only the differential operation of the image in carried out for detecting the movement portion, realization with a small size becomes possible.

As explained above, according to the present embodiments, there are the advantages that it becomes possible to slash the amount of transmitted information, possible to wirelessly transmit image data which can be reliably reproduced irrespective of the position of arrangement and the transmission rate, and possible to receive the radio signal from the transmitter and completely restore the original signal.

Further, according to the present embodiments, by compulsorily transmitting the original image information at a certain cycle, there is the advantage such that it becomes possible to restore the original image for that cycle time at the maximum even in the case where the communication obstacle occurs in the middle.

While the invention has been described with reference to specific embodiment chosen for purpose of illustration, it should be apparent that numerous modifications could be made thereto by those skilled in the art without departing from the basic concept and scope of the invention.

## Claims

1. A transmitter comprising:

   a storing means for storing input image data,
   a differentiating means for differentiating whether or not the image data being input has changed compared with the image data of a previous frame stored in the storing means,
   a transmission area setting means for setting the area of the image data to be transmitted according to an output of the differentiating means,
   a transmission area data adding means for adding data representing the area to the image data to be transmitted,
   a means for converting the image data to be transmitted and the data representing the area to a serial signal, and
   a transmitting means for transmitting the serial signal.

2. A transmitter as set forth in claim 1, wherein the transmission area getting means designates a partial area of the image data where there was no change in the image data being input compared with the image data of the previous frame.

3. A transmitter as set forth in claim 1, wherein:

   the transmission area setting means designates a partial area of the image data when there was no change in the image data being input compared with the image data of the previous frame and
   makes the transmitting means transmit the data representing the area of the image data and the image data in that area in one frame period and change the designated area for every frame so as to transmit all image data in a plurality of frame periods.

4. A transmitter as set forth in claim 1, wherein the transmission area setting means makes the transmitting means transmit the data representing the area of the image data and the image data in that area in one frame period when there was a change in the image data being input compared with the image data of the previous frame and in addition when the area of the changed image is less than the predetermined area.

5. A transmitter as set forth in claim 1, wherein;

   the transmission area setting means designates a partial area of the image data when there was a change in the image data being input compared with the image data of the previous frame and in addition when the area of the changed image is more than the predetermined area and
   makes the transmitting means transmit the data representing the area of the image data and the image data in that area in one frame period and change the designated area for every frame so as to transmit all image data in a plurality of frame periods.

6. A transmitter as set forth in claim 1, wherein, when there was a change in the image data being input compared with the image data of the previous frame, the transmission area setting means makes the transmitting means transmit the data representing the area of the image data and the image data in that area for one frame period when the area of the changed image is less than the predetermined area and designates a partial area of the image data and then makes the transmitting means transmit the data representing the area of the image data and the image data in that area in one frame period and change the designated area for every frame so as to transmit all image data in a plurality of frame periods when the area of the changed image is more than the predetermined area.

7. A transmitter as set forth in claim 1, further comprising a means for compulsorily transmitting the image data of one frame is a predetermined period irrespective of the image data being input has changed compared with the image data of the previous frame.

8. A transmitter as set forth in claim 2, further comprising a means for compulsorily transmitting the image data of one frame in a predetermined period irrespective of the image data being input has changed compared with the image data of the previous frame.

9. A transmitter as set forth in claim 3, further comprising a means for compulsorily transmitting the image data of one frame in a predetermined period irrespective of the image data being input has changed compared with the image data of the previous frame.

10. A transmitter as set forth in claim 4, further comprising a means for compulsorily transmitting the image data of one frame in a predetermined period irrespective of the image data being input has changed compared with the image data of the previous frame.

11. A transmitter as set forth in claim 5, further comprising a means for compulsorily transmitting the image data of one frame in a predetermined period irrespective of the image data being input has changed compared with the image data of the previous frame.

12. A transmitter as set forth in claim 6, further comprising a means for compulsorily transmitting the image data of one frame in a predetermined period irrespective of the image data being input has changed compared with the image data of the previous frame.

13. A receiver for receiving a serial radio signal containing image data and data representing an area of the image data, comprising:

a first restoring means for receiving the serial radio signal and restoring the same to a serial signal,

a second restoring means for restoring the transmitted image data and the data representing the area of the image data from the serial signal restored by the first restoring means,

a storing means for storing one frame's worth of the image data,

a writing means for writing the transmitted image data into the storing means based on the data representing the area, and

a reading means for reading the image data from the storing means.

14. A receiver as set forth in claim 13, wherein the period during which the writing means writes the transmitted image data into the storing means based on the data representing the area in defined as a blanking period of the output image data signal.

15. A signal transmission system comprising:

a transmitter including a storing means for storing input image data, a differentiating means for differentiating whether or not the image data being input has changed compared with the image data of the previous frame stored in the storing means, a transmission area setting means for setting an area of the image data to be transmitted according to an output of the differentiating means, a transmission area data adding means for adding data representing the area to the image data to be transmitted, a means for converting the image data to be transmitted and the data representing the area to a serial signal, and a transmitting means for transmitting the serial signal, and

a receiver including a first restoring means for receiving the transmitted serial radio signal and restoring the same to a serial signal, a second restoring means for restoring the transmitted image data and the data representing the area of the image data from the serial signal restored by the first restoring means, a storing means for storing one frame's worth of the image data, a writing means for writing the transmitted image data into the storing means based on the data representing the area, and a reading means for reading the image data from the storing means.

16. A signal transmission system as set forth in claim 15, wherein the transmission area Betting means of the transmitter designates a partial area of the image data where there was no change in the image data being input compared with the image data of the previous frame.

17. A signal transmission system as set forth in claim 15, wherein:

the transmission area setting means of the transmitter designates a partial area of the image data when there was no change in the image data being input compared with the image data of the previous frame and makes the transmitting means transmit the data representing the area of the image data and the image data in that area in one frame period and change the designated area for every frame so as to transmit all image data in a plurality of frame periods.

18. A signal transmission system as set forth in claim 15, wherein the transmission area setting means of the transmitter makes the transmitting means transmit the data representing the area of the image data and the image data in that area in one frame period when there was a change in the image data being input compared with the image data of the previous frame and in addition when the area of the changed image is less than the predetermined area.

19. A signal transmission system as set forth in claim 15, wherein:

the transmission area setting means of the transmitter designates a partial area of the image data when there was a change in the image data being input compared with the image data of the previous frame and in addition when the area of the changed image is more than the predetermined area and

makes the transmitting means transmit the data representing the area of the image data and the image data in that area in one frame period and change the designated area for every frame so as to transmit all image data in a plurality of frame periods.

20. A signal transmission system as set forth in claim 15, wherein, when there was a change in the image data being input compared with the image data of the previous frame, the transmission area setting means of the transmitter makes the transmitting means transmit the data representing the area of the image data and the image data in that area for one frame period when the area of the changed image is less than the predetermined area and designates a partial area of the image data and then makes the transmitting means transmit the data representing the area of the image data and the image data in that area in one frame period and change the designated area for every frame so as to transmit all image data in a plurality of frame periods when the area of the changed image is more than the predetermined area.

21. A signal transmission system as set forth in claim 15, wherein said transmitter further comprising a means for compulsorily transmitting the image data of one frame in a predetermined period irrespective of the image data being input has changed compared with the image data of the previous frame.

22. A signal transmission system as set forth in claim 16, wherein said transmitter further comprising a means for compulsorily transmitting the image data of one frame in a predetermined period irrespective of the image data being input has changed compared with the image data of the previous frame.

23. A signal transmission system as set forth in claim 17, wherein said transmitter further comprising a means for compulsorily transmitting the image data of one frame in a predetermined period irrespective of the image data being input has changed compared with the image data of the previous frame.

24. A signal transmission system as set forth in claim 18, wherein said transmitter further comprising a means for compulsorily transmitting the image data of one frame in a predetermined period irrespective of the image data being input has changed compared with the image data of the previous frame.

25. A signal transmission system as set forth in claim 19, wherein said transmitter further comprising a means for compulsorily transmitting the image data of one frame in a predetermined period irrespective of the image data being input has changed compared with the image data of the previous frame.

26. A signal transmission system as set forth in claim 20, wherein said transmitter further comprising a means for compulsorily transmitting the image data of one frame in a predetermined period irrespective of the image data being input has changed compared with the image data of the previous frame.

27. A signal transmission system as set forth in claim 15, wherein the period during which the writing means of the receiver writes the transmitted image data into the storing means based on the data representing the area is defined as a blanking period of the output image data signal.

28. A signal transmission system as set forth in claim 16, wherein the period during which the writing means of the receiver writes the transmitted image data into the storing means based on the data representing the area is defined as a blanking period of the output image data signal.

29. A signal transmission system as set forth in claim 17, wherein the period during which the writing means of the receiver writes the transmitted image data into the storing means based on the data representing the area is defined as a blanking period of the output image data signal.

30. A signal transmission system as set forth in claim 18, wherein the period during which the writing means of the receiver writes the transmitted image data into the storing means based on the data representing the area is defined as a blanking period of the output image data signal.

31. A signal transmission system as set forth in claim 19, wherein the period during which the writing means of the receiver writes the transmitted image data into the storing means based on the data representing the area is defined as a blanking period of the output image data signal.

32. A signal transmission system as set forth in claim 20, wherein the period during which the writing means of the receiver writes the transmitted image data into the storing means based on the data representing the area is defined as a blanking period of the output image data signal.

33. A signal transmission system as set forth in claim 21, wherein the period during which the writing means of the receiver writes the transmitted image data into the storing means based on the data representing the area is defined as a blanking period of the output image data signal.

**EP 1 069 776 A2**

**34.** A signal transmission system as set forth in claim 22, wherein the period during which the writing means of the receiver writes the transmitted image data into the storing means based on the data representing the area is defined as a blanking period of the output image data signal.

**35.** A signal transmission system as set forth in claim 23, wherein the period during which the writing means of the receiver writes the transmitted image data into the storing means based on the data representing the area is defined as a blanking period of the output image data signal.

**36.** A signal transmission system as sat forth in claim 24, wherein the period during which the writing means of the receiver writes the transmitted image data into the storing means based on the data representing the area is defined as a blanking period of the output image data signal.

**37.** A signal transmission system as set forth in claim 25, wherein the period during which the writing means of the receiver writes the transmitted image data into the storing means based on the data representing the area is defined as a blanking period of the output image data signal.

**38.** A signal transmission system as set forth in claim 26, wherein the period during which the writing means of the receiver writes the transmitted image data into the storing means based on the data representing the area is defined as a blanking period of the output image data signal.

**39.** A signal transmission system as set forth in claim 27, wherein the period during which the writing means of the receiver writes the transmitted image data into the storing means based on the data representing the area is defined as a blanking period of the output image data signal.

FIG.1

# FIG.2

## 103

# FIG.3

106

1069

Hsync ⟶ | MICROPROCESSOR | ⟶ S1069X
Vsync ⟶ | | ⟶ S1069Y

1061

| X-VALUE MAXIMUM VALUE REGISTER |

1063

| Y-VALUE MAXIMUM VALUE REGISTER |

1067

| MAXIMUM VALUE |

| MAXIMUM VALUE |

1065

1062

1064

| X-VALUE MINIMUM VALUE REGISTER |

| X-VALUE MINIMUM VALUE REGISTER |

1068

| MINIMUM VALUE |

| MINIMUM VALUE |

1066

S1032 (ADDRESS X-VALUE)          S106    S1033 (ADDRESS Y-VALUE)

EP 1 069 776 A2

# FIG.4

| FF | 00 | 00 | E0 | | | | | 01 | FF | 00 | 00 | 70 | R1 | G1 | B1 | R2 | | R64 | C64 | B64 |

EAV     DISPLAY AREA     SAV     1PIXEL DATA
INDICATION DATA

SPARE

# FIG.5

| | 1 | 0 |
|---|---|---|
| MSB<br><br>7bit<br><br>6bit<br><br>5bit | EAV<br><br>H<br><br>nop<br><br>data | SAV<br><br>V<br><br>active<br><br>address |
| 4−3bit | mode DESIGNATION | |
| 2−1bit | error CORRECTION | |

# FIG.6

# FIG.7

<u>202</u>

EP 1 069 776 A2

# FIG.8

EP 1 069 776 A2

# FIG.9

# FIG.10

```
┌─────────────────────────────────────────────────────────────────────────┐
│  31            32              33                    34                    │
│  ┌──────────┐  ┌──────┐  ┌──────────┐      ┌──────────────┐              │
│  │ COMPUTER │→ │ A/D  │→ │ ENCODER  │  →   │  MODULATION  │              │
│  └──────────┘  └──────┘  └──────────┘      │   CIRCUIT    │              │
│                                            └──────────────┘              │
│  35            36              37                                         │
│  ┌──────┐  ┌────────────┐  ┌──────┐                        30            │
│  │ D/A  │→ │ LED DRIVER │→ │ LED  │                                       │
│  └──────┘  └────────────┘  └──────┘                                       │
└─────────────────────────────────────────────────────────────────────────┘

                                     ┌──────┐
40                                   │  PD  │  41
                                     └──────┘
┌─────────────────────────────────────────────────────────────────────────┐
│  42              43              44                    45                  │
│  ┌──────────────┐  ┌──────┐  ┌──────────────┐  ┌──────────┐             │
│  │ AMPLIFICATION│→ │ A/D  │→ │ DEMODULATION │→ │ DECODER  │             │
│  │   CIRCUIT    │  └──────┘  │   CIRCUIT    │  └──────────┘             │
│  └──────────────┘            └──────────────┘                            │
│  46                                                                       │
│  ┌──────┐  ┌──────────┐                                                   │
│  │ D/A  │→ │ DISPLAY  │─47                                                │
│  └──────┘  └──────────┘                                                   │
└─────────────────────────────────────────────────────────────────────────┘
```

EP 1 069 776 A2

# FIG.11

EP 1 069 776 A2

# FIG.12

B (1,1)

B (128,96)

FIG.13A

$F_n$

FIG.13B

$F_{n-1}$

FIG.13C

E:EXISTENCE
N:NONEXISTENCE

RESULT OF DIFFERENTIATION

B(3, 2) AND B(2, 3) ARE CHANGED BLOCKS

# FIG.14

| FRMsync | BADR | PRT | DT |
|---------|------|-----|-----|

# FIG.15

<u>45</u>

# FIG.16

DATA IS SENT BY NUMBER OF BLOCKS WHICH CAN BE TRANSMITTED IN THE TIME OF ONE FRAME FROM UPPERMOST PORTION IMAGE — ST1

ST2 — IS THERE A DIFFERENTIAL DETECTION BLOCK IN NEXT BLOCK ? — NO

ST3 — YES

ST5 — IS LOWERMOST PORTION AREA SENT ? — NO

DIFFERENTIAL BLOCK IS TRANSMITTED

YES

ST4 — 5 SECONDS ELAPSED ? — NO

ST6 — AREA NEXT TO AREA SENT DURING PREVIOUS FRAME IS SENT BY NUMBER OF BLOCKS WHICH CAN BE TRANSMITTED IN THE TIME OF ONE FRAME (THIS IS SEQUENTIALLY COUNTED UP TO LOWERMOST PORTION ARER OF IMAGE)

ST7 — YES

ORIGINAL IMAGE DATA OF ONE FRAME IS TRANSMITTED

EP 1 069 776 A2